# EUROPEAN PATENT APPLICATION

(11) **EP 2 874 136 A1**
(43) Date of publication of application: **20.05.2015**
(21) Application number: 13425148.7
(22) Date of filing: 15.11.2013
(51) Int. Cl.: G09F 3/02, G09F 3/03

(54) **Device for recognising the authenticity of a packaged product to be sold**

(71) Applicant: Marchesano, Matteo, 11020 Aosta (AO) (IT)
(72) Inventor: Marchesano, Matteo, 11020 Aosta (AO) (IT)
(74) Representative: Ciceri, Fabio

(57) **Abstract**

The present invention regards a device for recognising the authenticity of a packaged product to be sold, arranged in a container provided with a passage through which the product may be extracted for the utilisation or consumption thereof, comprising a seal (16) whose breakage is performed so as to allow the opening of said passage. The device comprises an element (19) for the authentication of the product positioned on a portion of the seal not visible from the external thereof and solely accessible following the breakage of the seal.

Preferably said element (19) for authenticating the product consists of a unique code generated through algorithms, the container of the product is a bottle and the relative seal is the capsule (16) for covering the neck of the bottle and the relative cap.

## Description

The present invention refers to a device for recognising the authenticity of a packaged product to be sold, arranged in a container provided with a passage through which the product may be extracted for the utilisation or consumption thereof, comprising a seal whose breakage is performed so as to allow the opening of said passage.

According to the method currently in use, the container or, more generally, the product packaging, is provided with a recognition identification in form of a code, for example a barcode or two-dimensional code, whose reading allows the identification of the product, the name of the manufacturer as well as any other information regarding the product such as, for example, the expiry date if the product in question is edible.

The recognition indication in form of a code, according to the prior art, is usually put on the container or on the packaging in position such so as to be detected and read by special apparatuses in that, mainly, such indication is intended to control the movement of the seller's warehouse and provide data for preparing receipts or invoices.

However, given the visibility thereof on the container or on the packaging, the indication, though in form of a code, may be cloned and deceitfully placed on containers or packagings in which the counterfeit product or the product not corresponding to the original one, is arranged.

Therefore, the coded indication, according to the prior art, applied in positions visible on the container or on the packaging of the product are not capable of guaranteeing, through the reading thereof, the actual authenticity of the purchased product, in other words, the matching between the product and the name and the origin declared on the container or on the packaging of the product.

The object of the present invention is to provide a solution to the problem of identification of the authenticity of a product capable of reducing the drawbacks observable regarding the known art currently in use.

The object is attained through a device for recognizing the authenticity of a product that is characterized according to the following claim 1.

The invention shall now be described further in detail with reference to some embodiments thereof, provided solely by way of non-limiting example, illustrated in the attached drawings, wherein:
- figure 1 schematically shows, in perspective view, a box-shaped packaging with seal on the opening, according to the invention, in closed position and with product authentication element arranged on the back surface of the seal;
- figure 2 shows the packaging of figure 1 in open position with broken seal;
- figure 3 shows, in perspective view, the end of the neck of a bottle with the cover capsule serving as a seal, in closed position, with authentication element arranged on the inner surface of the capsule facing towards the visible end of the cap;
- figure 4 shows, in perspective view, the end of the bottle neck of figure 3 with capsule open at the closure cap of the bottle;
- figure 5 shows, in perspective view, the end of the neck of a bottle with cover capsule serving as seal, in closed position, provided with tear means for the easy opening thereof with authentication element arranged on the back of the tubular part of the capsule;
- figure 6 shows, in perspective view, the end of the neck of a bottle like in figure 5 with cover capsule serving as a seal, in open position;
- figure 7 shows, in perspective view, the end of the neck of a bottle of a cover capsule serving as a seal, in closed position provided with tear means for the easy opening thereof with authentication element arranged on the back of the tab for opening the capsule;
- figure 8 shows, in perspective view, the operation of breakage of the capsule of figure 7 showing the authentication element;
- figure 9 shows, in perspective view, the operation of reading the authentication element shown in figure 8;
- figure 10 shows a further perspective view of the end of the neck of a bottle with cover capsule serving as a seal, in closed position provided with tear means for the easy opening thereof with the authentication element arranged on the back of the opening tab of the capsule.

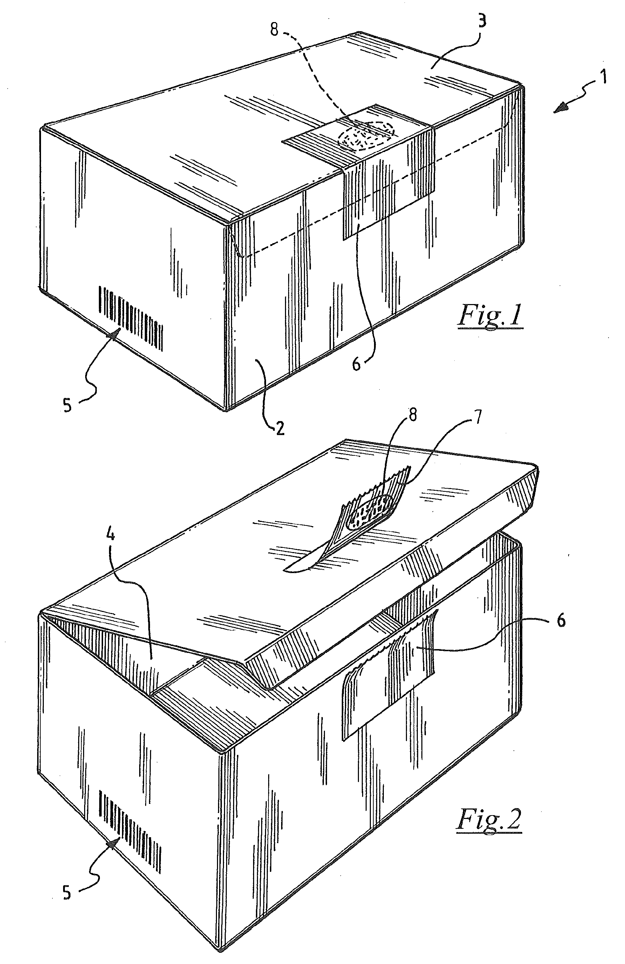

With reference to the aforementioned figures and in particular figures 1 and 2, it should be observed that a general and conventional box-shaped packaging with a portion 2 serving as a container and a portion 3 serving as a cover for closing and opening the opening 4 which allows access into the container for the introduction and the removal of the product, not illustrated, contained in the packaging, is indicated with 1.

In a wall of the packaging, in a position observable from the external, a conventional barcode may be placed, or of the two-dimensional type, schematically indicated with 5, to be read through the conventional product identification operations, for example when selling and issuing a receipt.

The packaging is also provided with a seal 6, fixed using the conventional method between the cover 3 and the container 2, with the function of maintaining the opening 4 closed and guaranteeing the integrity of the packaging.

According to the invention, the seal 6 is provided, in a portion of the surface 7 thereof faced towards the packaging and thus neither accessible nor observable from the external when the seal is integral and applied on the packaging, with an authentication element 8 of the product.

Such element 8 for authenticating the product consists of a unique code, generated through special algorithms, and printed on the inner surface 7 of the seal as a barcode or as a two-dimensional code.

Alternatively, the unique code may be contained in a medium of the RFID type to be fixed, for example glued, to the inner surface 7 of the sealing.

The authentication element 8 may be read only when it is made accessible following the breakage of the seal 6 and, as indicated in figure 2, after lifting the portion of seal that includes it.

Within the scope of the present invention, the term container is used to indicate a general box in which a product freely utilisable and/or marketed intended for use or consumption by a purchaser is placed, same case applying, for example, to a bottle containing wine or liquor or any other type of liquid product, whether edible or not.

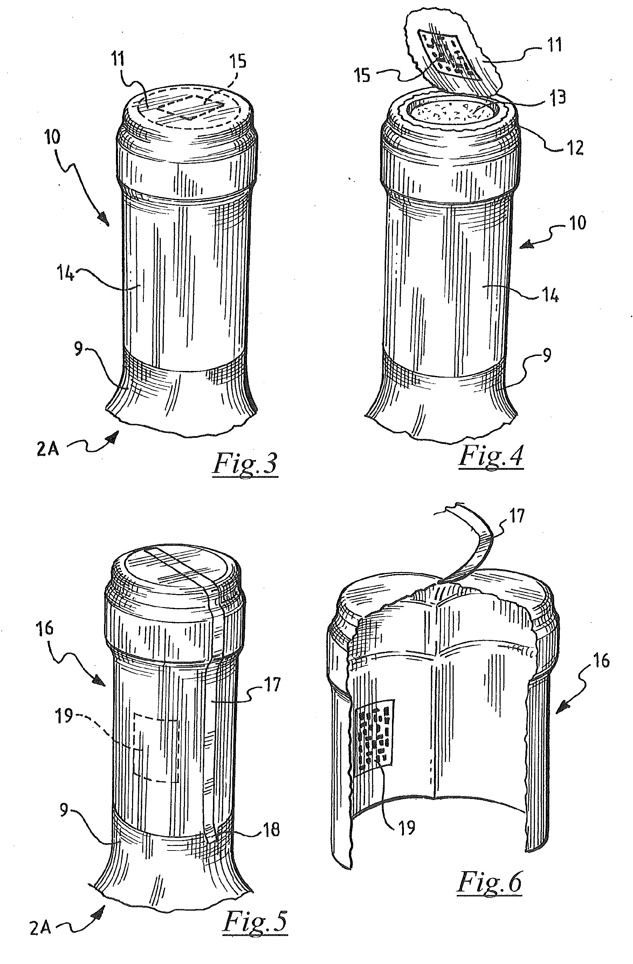

With reference to figures 3 and 4 it should be observed that, in case of bottles, particularly those intended to contain fine beverages, in a first embodiment, the neck 9 is covered by a capsule 10 which serves as a seal. The latter comprises a portion 11 which extends above the end 12 of the neck, closed by a conventional cap 13, and at least one tubular portion 14 which extends axially around the neck.

As known, the cover capsule 9, in a conventional embodiment thereof, may be made of PVC plastic material, or polylaminate, or even aluminium or tin or PET. After being placed on the neck 9 of the bottle it is made to adhere thereto thus covering the cap and serving the seal function.

According to the invention and as illustrated in figures 3 and 4, the capsule 10 in an embodiment thereof, is provided with an authentication element 15, positioned in the portion 11 on the surface thereof facing towards the cap 13.

Upon opening the bottle, before extracting the cap 13, the portion 11 of the capsule 10 is engraved circumferentially and, when detached, at least partially, from the tubular portion 14 of the capsule it allows accessibility and visibility to the authentication element 15 which may thus be read.

With reference to figures 5 and 6 it should be observed that, in a different embodiment, the capsule, indicated with 16, is provided with an axial area 17 with easy breaking in form of a tab with an end 18 so as to be grasped manually to tear and perform the removal of the capsule 16.

As shown in figure 6, in the inner tubular surface 16a, not visible from the external when the capsule 16 is placed on the neck 9 of the bottle, the authentication element indicated with 19 which may thus be read only subsequently to the breakage of the capsule 16 which constitutes the seal of the bottle is arranged.

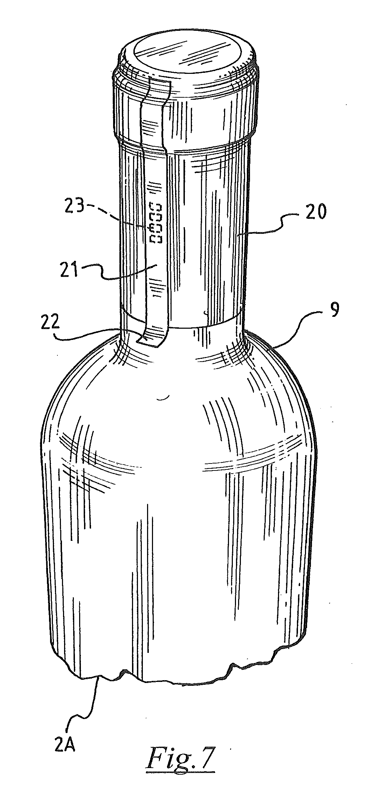

With reference to figures 7, 8 and 10, different embodiments of the capsule according to the invention are shown.

The capsule 20, placed on the neck 9 of a bottle, is provided with an area 21 with easy opening in form of a tab with an end 22 for grasping manually to perform the tearing.

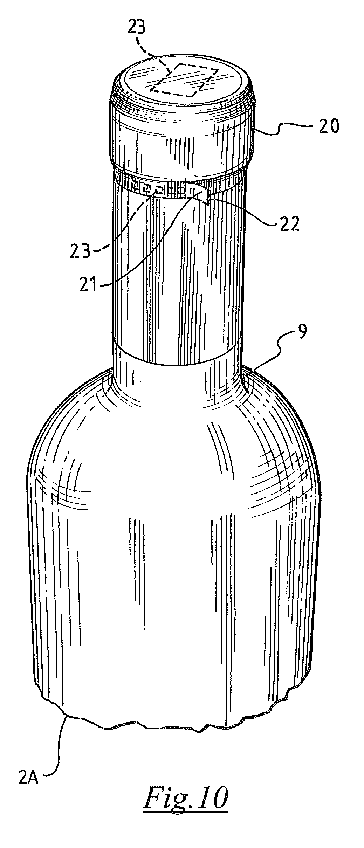

The tab may be arranged parallel to the neck of the bottle or in a circumferential position as illustrated in figure 10.

According to the invention, the inner surface of the tab 22 is provided with an authentication element 23 not visible from the external and which may thus be read solely after breaking of the capsule i.e. after breaking the sealing that the capsule serves with respect to the bottle.

Alternatively, the authentication element 23 may be arranged on the inner surface of a capsule area 20.

Still alternatively, the authentication element 23 may be arranged in both positions, on the tab 22 and in the capsule area 20, so as to ensure the reading in case one of the two authentication elements is damaged or not readable.

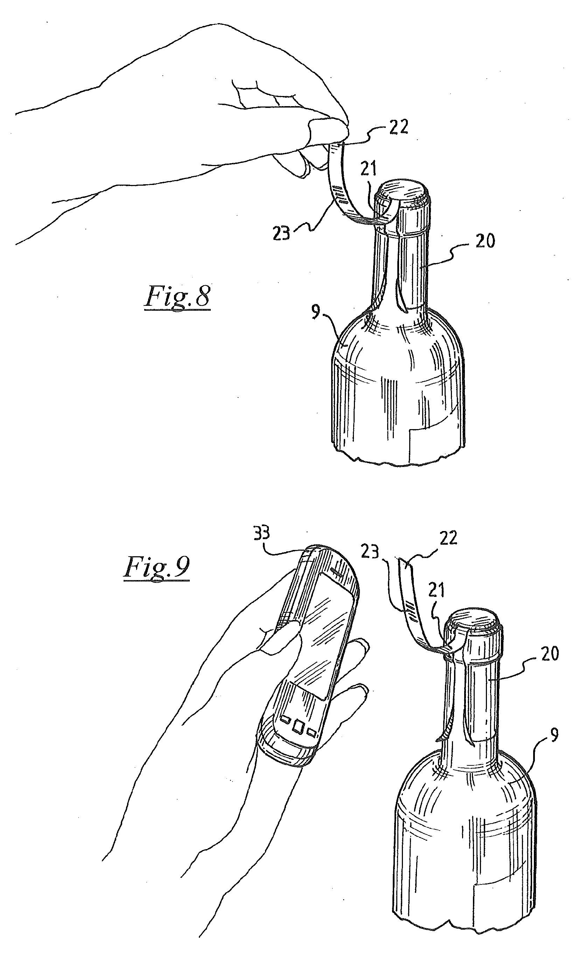

The reading of the authentication element 23 same case applying to those indicated with 7, 15, 19 in the other embodiments of the invention described previously, may occur, for example as illustrated in figure 9, through a mobile telephone as long as it is provided with a computer programme configured for the reading of such authentication element which is in form of a unique code and for sending the latter to a remote server.

The invention is obviously susceptible to other embodiments equivalent to each other, particularly as regards the shape and the structure of the seal and the position of the authentication element with respect to the seal, without departing from the scope of protection of the invention as described and claimed hereinafter.

## Claims

1. Device for recognising the authenticity of a packaged product to be sold, arranged in a container provided with a passage through which the product may be extracted for the utilisation or consumption thereof, comprising a seal (6,10, 16, 20) whose breakage is performed so as to allow the opening of said passage **characterized in that** it comprises an authentication element (7, 15,19,23) of the product positioned on a portion of the seal not visible from the external thereof and solely accessible following the breakage of the seal.

2. Device according to claim 1 **characterized in that** said product authentication element (7, 15,19,23) consists of a unique code generated through algorithms.

3. Device according to claims 1 and 2, **characterized in that** the container of the product is a bottle and the relative seal is the capsule (10, 16, 20) for covering the neck (9) of the bottle and the relative cap (13).

4. Device according to claim 3, **characterized in that** said element (15) for authenticating the product is positioned in the portion (11) of the capsule (10) facing towards the cap (13).

5. Device according to claim 3, **characterized in that** said element (19) for authenticating the product is positioned in the inner tubular surface (16a) of the capsule (16) facing towards the neck (9).

6. Device according to claim 3, **characterized in that** said element (23) for authenticating the product is positioned on the inner surface of an area (21) for the easy opening of the capsule (20).

7. Device according to any one of claims 1 to 6, **characterised in that** it comprises at least two authentication elements positioned on respective areas of the seal not visible from the external.
